# EUROPEAN PATENT SPECIFICATION

(11) **EP 1 380 759 B1**
(45) Date of publication and mention of the grant of the patent: **17.10.2007**
(21) Application number: 03253758.1
(22) Date of filing: 13.06.2003
(51) Int. Cl.: F16B 5/02, F01D 5/30, F16B 31/06, F01D 5/06

(54) **Stress defender holes in jointings**
Löcher zur Entlastung von Spannungen in Verbindungen
Trous pour détente de tension dans des fixations

(30) Priority: 13.07.2002 GB 0216362
(43) Date of publication of application: 14.01.2004
(73) Proprietor: ROLLS-ROYCE PLC, London, SW1E 6AT (GB)
(72) Inventor: Wagner, Stefan Jochen, Derby DE24 3LU (GB)
(74) Representative: Gunn, Michael Alan

(56) References cited:
- EP-A- 0 905 346
- EP-A- 1 304 489
- US-A- 4 292 376
- US-A- 4 887 949
- US-A- 5 497 616
- BEITZ ET AL: "Dubbel Taschenbuch für den Maschinenbau" 1987, SPRINGER-VERLAG , BERLIN , XP002259193 * page E12 - page E15 *

## Description

The present invention relates to stress defender holes. In particular, it relates to a novel form of stress defender hole which finds particular application when the position and/or size of the hole is constrained.

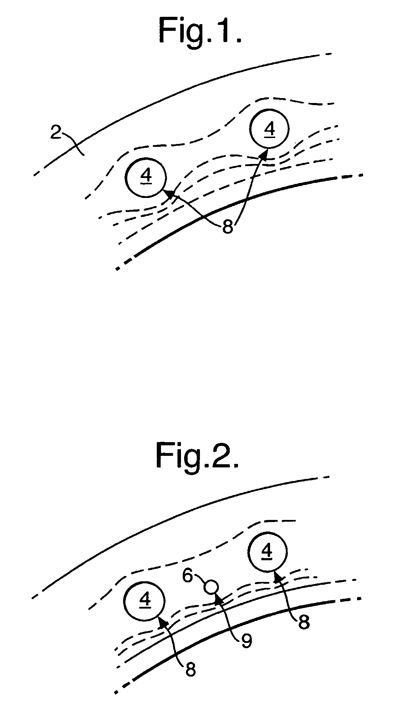

Fig. 1 illustrates part of an annular flange 2 with holes 4 therethrough. The holes 4 are for receiving bolts which are used to connect the flange to another flange. The figure illustrates the stress lines within the flange 2, as dotted lines. If the peak stress at positions 8, exceeds a threshold then the flange 2 may be compromised. It is therefore known to introduce stress defender holes 6 into the flange 2 as illustrated in Fig. 2. The stress defender hole 6 is positioned between the bolt holes 4. Whereas the bolt holes 4 lie at a constant radius R1 from the axis of the flange, the stress defender hole is positioned at a radius R2 which is less than R1. As R2 is decreased, the stress defender hole 6 moves into the stress field. The stresses within the flange 2 are therefore concentrated upon the stress defender 6 at position 9 and not upon the positions 8. It is possible to reduce the stress on the bolt holes 4, by increasing the size of the stress defender hole 6 or by reducing the radius R2.

A problem, however, arises if there are constraints on the size and/or the position of the stress defender hole 6. In these circumstances, the stress defender hole 6 cannot be positioned or sized to reduce the stress on the bolt holes below the threshold value. Embodiments of the present invention address this problem.

According to the present invention, an arrangement of component parts, comprising first and second components interconnected by fastening means, said second component being subject, in operation to a stress field, and having a plurality of first holes extending therethrough, said second component additionally having a plurality of stress defender holes extending therethrough, said stress defender holes being positioned between said first holes so that the stress field within said component is concentrated upon said stress defender holes, each of said stress defender holes comprising a first portion of generally cylindrical configuration and a second portion terminating at a surface of said component to define a circular opening having a diameter greater than that of said generally cylindrical first portion, said first and second stress defender hole portions being coaxial.

Said second portion of each of said stress defender holes may be of frusto-conical configuration.

Said frusto-conical portion is preferably at an angle of substantially 45 degrees to said component surface.

Alternatively, said second portion of each of said stress defender holes may be of generally cylindrical configuration.

Said second component is preferably positioned adjacent said first component and has a plurality of first holes corresponding and aligned with said first holes in said first component, and a plurality of stress defender holes corresponding and aligned with said stress defender holes in said first component, said first holes in said first and further components receiving said fastening means to facilitate the attachment of said first and second components to each other.

Said stress defender holes are preferably aligned to receive further bolts to facilitate the attachment of first and further components to each other.

Said first and second components may be in the form of flanges.

Said flanges may be of circular configuration.

Said component may comprise a portion of a gas turbine engine.

For a better understanding of the present invention reference will now be made by way of example only to the accompanying drawings in which:
Fig. 1 illustrates stress fields in a flange with bolt holes;
Fig. 2 illustrates the effect of a stress defender hole;
Fig. 3a illustrates a cross-sectional view of an assembly according to one embodiment of the present invention;
Fig. 3b shows a perspective view of a first flange;
Fig. 3c shows a perspective view of a second flange;
Fig. 4a illustrates a cross-sectional view through the second flange illustrated in Fig. 3c; and
Fig. 4b illustrates alternative dimensioning for the stress reducing hole.

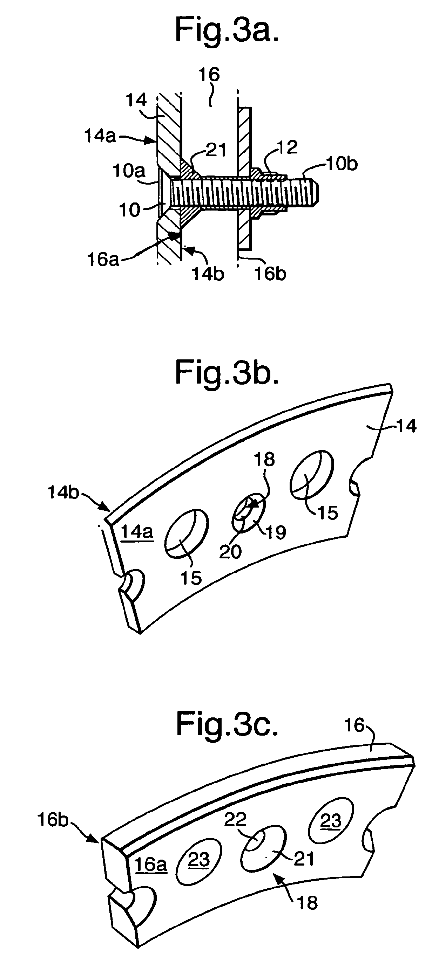

Figs. 3a, 3b and 3c illustrate an interconnected arrangement (or assembly) of component parts in accordance with one embodiment of the present invention. In the arrangement, a first metal flange 14 is connected to a second flange 16 by fastening means which in this example is a metal bolt 10 and nut 12. The bolt has a head portion 10a and a body portion 10b. The body portion 10b is substantially cylindrical in shape with a radius of R1. The head portion 10a is circular in shape and has a radius R2 which is greater than R1.

The first flange 14 has a front face 14a and a back face 14b. The flange 14 has two bolt holes 15 extending from the front face 14a to the back face 14b. The first flange 14 also has a stress defender hole 18 which is circular in shape and extends from the front face 14a to the back face 14b. The stress defender hole 18 has two portions - a countersunk portion 19 for receiving the bolt head 10a and an engaging portion 20 for contacting the body 10b of the bolt 10. The engaging portion 20 is cylindrical in shape and has a radius just greater than R1 so that the body of the bolt 10 fits snugly within it. The countersunk portion 19 is of a standard type and the bevelled portions of the first flange 14 defining the countersunk portion 19 subtend an angle of 100° at the axis of the bolt 10. The opening which the countersunk portion 19 makes at the front face 14a of the first flange 14 has a radius just greater than R2, so that the bevelled head 10a of the bolt 10 is received therein.

The second flange 16 has a front face 16a and a back face 16b. There are two bolt holes 23 which extend from the front face 16a to the back face 16b. These bolt holes 23 are aligned in the arrangement with the bolt holes 15 of the first flange 14. The second flange 16 also has a stress defender hole 18 which is circular in shape and extends from the front face 16a to the back face 16b of the second flange 16. The stress defender hole 18 in the second flange 16 is aligned with the stress defender hole 18 in the first flange 14 and has two portions: a stress defending portion 21 and an engaging portion 22. The stress defending portion 21 has a frusto-conical shape forming a circular opening in the front face 16a of the second flange 16. This opening has a radius R3 which is greater than R1. The engaging portion 22 of the stress defender hole 18 in the second flange 16 extends from the rear face 16b of the second flange and joins with the stress defending portion 21. The engaging portion 22 has a cylindrical shape with a radius just greater than R1 so that the body of the bolt 10 can be snugly received therein. The frusto-conical stress defending portion 21, the cylindrical engaging portion 22, the cylindrical engaging portion 20 and the bevelled countersunk portion 19 are all coaxial.

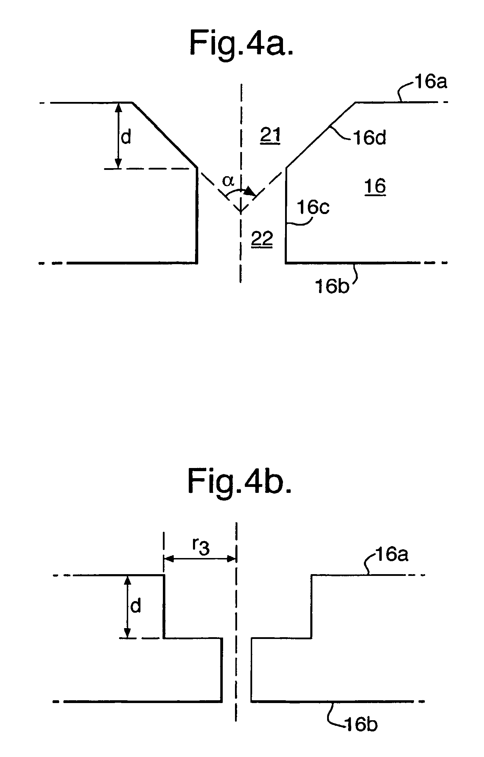

Fig. 4a illustrates a cross-section through the stress defender hole 18 of the second flange 16. The stress defender hole 18 has a cylindrical engaging part 22 defined by the side walls 16c of the second flange 16 and a frusto-conical stress defending portion 21 defined by the bevelled side walls 16b of the second flange 16. The bevelled walls 16b of the second flange subtend an angle of α at the axis of the stress defender hole 18. This angle α is preferably 90°. The stress defending properties of the stress defending portion 21 may be adapted by varying the angle α, the depth d or radius r3 of the frusto-conical section defining the stress defending portion 21.

Referring to Fig. 3a, when the first flange 14 is bolted to the second flange 16 using the bolt 10 the rear portion 14b of the first flange and the front portion 16a of the second flange 16 make contact. The cylindrical body portion 10b of the bolt 10 extends through the portion of the stress defender hole 18 defined by the second flange 16. The side walls 16c of the second flange 16 defining the engaging part 22 of the stress defender hole 18 engage the body 10b of the bolt 10. The bevelled side walls 16b of the flange 16 which define the frusto-conical stress defending portion 21 of the stress defender hole 18 do not make contact with the bolt 10. Thus the stress defending portion 21 is unoccupied and forms an occlusion within the arrangement.

In the foregoing description, the stress defending portion 21 of the stress defending hole 18 in the second flange 16 was frusto-conical. According to another embodiment, illustrated in Fig. 4b, the stress defending portion 21 may be cylindrical in shape with the cylinder having a radius r3. The radius r3 and the depth d of the stress defending portion 21 may be altered to vary the stress defending properties of the stress defender hole 18.

In the foregoing description a particular attachment means is described, namely a bolt. However other attachment means could be used such as screws. In this case the side walls 16c of the second flange would be substantially but not exactly cylindrical as they would include threads for receiving corresponding threads of the screw.

## Claims

1. An arrangement of component parts comprising first and second components (14, 16) interconnected by fastening means (10, 12), said second component (16), being subject in operation to a stress field, and having a plurality of first holes (23) extending therethrough, said second component (16) additionally having a plurality of stress defender holes (18) extending therethrough, said stress defender holes (18) being positioned between said first holes (23) so that the stress field within said component (16) is concentrated upon said stress defender holes (18), **characterised in that** each of said stress defender holes (18) comprises a first portion (22) of generally cylindrical configuration and a second portion (21) terminating at a surface (16a) of said component (16) to define a circular opening having a diameter greater than that of said generally cylindrical first portion (22), said first and second stress defender hole portions (21,22) being coaxial.

2. An arrangement of component parts as claimed in claim 1 **characterised in that** said second portion (21) of each of said stress defender holes (18) is of frusto-conical configuration.

3. An arrangement of component parts as claimed in claim 2 **characterised in that** said frusto-conical portion (21) is at an angle of substantially 45 degrees to said component surface (16a).

4. An arrangement of component parts as claimed in claim 1 **characterised in that** said second portion (22) of each of said stress defender holes (18) is of generally cylindrical configuration.

5. An arrangement of component parts as claimed in any one preceding claim **characterised in that** said first component (14) is positioned adjacent said second component (16) and has a plurality of first holes (15) corresponding and aligned with said first holes (23) in said first component (14), and a plurality of stress defender holes (18) corresponding and aligned with said stress defender holes (18) in said second component (16), said holes (15,23) in said first and second components (14,16) receiving said fastening means (10, 12) to facilitate the attachment of said first and further components (14,16) to each other.

6. An arrangement of component parts as claimed in claim 5 **characterised in that** corresponding stress defender holes (18) in each of said first and second components (14,16) are aligned to receive further fastening means (10, 12) to facilitate the attachment of first and further components (14,16) to each other.

7. An arrangement of component parts as claimed in claim 1 **characterised in that** said first and second components (14, 16) are in the form of flanges.

8. An arrangement of component parts as claimed in claim 7 **characterised in that** said flanges are of circular configuration.

9. An arrangement of component parts as claimed in any one preceding claim **characterised in that** said fastening means (10, 12) comprises a nut and bolt assembly.

10. An arrangement of component parts as claimed in any one preceding claim **characterised in that** said component comprises a portion of a gas turbine engine.

## Patentansprüche

1. Anordnung von Bauteilen, bestehend aus ersten und zweiten Bauteilen (14, 16), die durch Befestigungsmittel (10, 12) verbunden sind, wobei der zweite Bauteil (16) im Betrieb einem Spannungsfeld ausgesetzt ist und mehrere durchgehende erste Löcher (23) aufweist und der zweite Bauteil (16) außerdem mehrere durchgehende Entspannungslöcher (18) aufweist, die zwischen den ersten Löchern (23) derart angeordnet sind, dass das Spannungsfeld innerhalb des Bauteils (16) auf die Entspannungslöcher (18) konzentriert wird,
**dadurch gekennzeichnet, dass** jedes Entspannungsloch (18) einen ersten Abschnitt (22) allgemein zylindrischer Gestalt und einen zweiten Abschnitt (21) aufweist, der an einer Oberfläche (16a) des Bauteiles (16) endet, um dort eine zylindrische Öffnung zu definieren, deren Durchmesser größer ist als der Durchmesser des erwähnten allgemein zylindrischen ersten Abschnittes (22), wobei die ersten und zweiten Abschnitte (21, 22) des Entspannungsloches koaxial zueinander verlaufen.

2. Anordnung von Bauteilen nach Anspruch 1,
**dadurch gekennzeichnet, dass** der zweite Abschnitt (21) eines jeden Entspannungsloches (18) eine kegelstumpfförmige Gestalt besitzt.

3. Anordnung von Bauteilen nach Anspruch 2,
**dadurch gekennzeichnet, dass** der kegelstumpfförmige Abschnitt (21) unter einem Winkel von etwa 45 Grad gegenüber der Oberfläche (16a) des Bauteils verläuft.

4. Anordnung von Bauteilen nach Anspruch 1,
**dadurch gekennzeichnet, dass** der zweite Abschnitt (22) eines jeden Entspannungsloches (18) allgemein zylindrische Gestalt besitzt.

5. Anordnung von Bauteilen nach einem der vorhergehenden Ansprüche,
**dadurch gekennzeichnet, dass** der erste Bauteil (14) benachbart zu dem zweiten Bauteil (16) angeordnet ist und mehrere erste Löcher (15) besitzt, die den ersten Löchern (23) in dem ersten Bauteil (14) entsprechen und auf diese ausgerichtet sind und dass mehrere Entspannungslöcher (18) entsprechend den Entspannungslöchern (18) in dem zweiten Bauteil (16) auf diese ausgerichtet sind, wobei die Löcher (15, 23) in dem ersten und zweiten Bauteil (14, 16) die Befestigungsmittel (10, 12) aufnehmen, um den ersten Bauteil mit weiteren Bauteilen (14, 16) zu verbinden.

6. Anordnung von Bauteilen nach Anspruch 5,
**dadurch gekennzeichnet, dass** entsprechende Entspannungslöcher (18) in jedem ersten und zweiten Bauteil (14, 16) aufeinander ausgerichtet sind, um weitere Befestigungsmittel (10, 12) aufzunehmen und den ersten Bauteil mit weiteren Bauteilen (14, 16) zu verbinden.

7. Anordnung von Bauteilen nach Anspruch 1,
**dadurch gekennzeichnet, dass** die ersten und zweiten Bauteile (14, 16) in Form von Flanschen ausgebildet sind.

8. Anordnung von Bauteilen nach Anspruch 7,
**dadurch gekennzeichnet, dass** die Flansche eine kreisförmige Gestalt besitzen.

9. Anordnung von Bauteilen nach einem der vorhergehenden Ansprüche,
**dadurch gekennzeichnet, dass** die Befestigungsmittel aus Bolzen und Mutter bestehen.

10. Anordnung von Bauteilen nach einem der vorhergehenden Ansprüche,
**dadurch gekennzeichnet, dass** die Bauteile in einem Gasturbinentriebwerk eingebaut sind.

## Revendications

1. Arrangement de parties de composant comprenant un premier et un second composants (14, 16) interconnectés par des moyens d'attache (10, 12), ledit second composant (16) étant sujet en fonctionnement à un champ de contrainte, et ayant une pluralité de premiers trous (23) s'étendant à travers, ledit second composant (16) ayant de plus une pluralité de trous de détente (18) s'étendant à travers, lesdits trous de détente de contrainte (18) étant positionnés entre lesdits premiers trous (23) de sorte que le champ de contrainte au sein dudit composant (16) est concentré au-dessus desdits trous de détente de contrainte (18), **caractérisé en ce que** chacun desdits trous de détente de contrainte (18) comprend une première partie (22) de configuration généralement cylindrique et une seconde partie (21) se terminant au niveau d'une surface (16a) dudit composant (16) pour définir une ouverture circulaire ayant un plus grand diamètre que celui de ladite première partie généralement cylindrique (22), lesdites première et seconde parties de trous de détente de contrainte (21, 22) étant coaxiales.

2. Arrangement de parties de composant selon la revendication 1, **caractérisé en ce que** ladite seconde partie (21) de chacun desdits trous de détente de contrainte (18) est de configuration tronconique.

3. Arrangement de parties de composant selon la revendication 2, **caractérisé en ce que** ladite partie tronconique (21) est à un angle de sensiblement 45 degrés par rapport à ladite surface (16a) du composant.

4. Arrangement de parties de composant selon la revendication 1, **caractérisé en ce que** ladite seconde partie (22) de chacun desdits trous (18) de détente de contrainte est de configuration généralement cylindrique.

5. Arrangement de parties de composant selon l'une quelconque des revendications précédentes, **caractérisé en ce que** ledit premier composant (14) est positionné adjacent audit second composant (16) et a une pluralité de premiers trous (15) correspondants et alignés avec lesdits premiers trous (23) dans ledit premier composant (14), et une pluralité de trous (18) de détente de contrainte correspondants et alignés avec lesdits trous (18) de détente de contrainte dans ledit second composant (16), lesdits trous (15, 23) dans lesdits premier et second composants (14, 16) recevant lesdits moyens d'attache (10, 12) pour faciliter l'attache desdits premier et autres composants (14, 16) l'un à l'autre.

6. Arrangement de parties de composant selon la revendication 5, **caractérisé en ce que** les trous (18) de détente de contrainte correspondants dans chacun desdits premier et second composants (14, 16) sont alignés pour recevoir d'autres moyens de fixation (10, 12) pour faciliter l'attache du premier et des autres composants (14, 16) l'un à l'autre.

7. Arrangement de parties de composant selon la revendication 1, **caractérisé en ce que** lesdits premier et second composants (14, 16) sont en forme de brides.

8. Arrangement de parties de composant selon la revendication 7, **caractérisé en ce que** lesdites brides sont de configuration circulaire.

9. Arrangement de parties de composant selon l'une quelconque des revendications précédentes, **caractérisé en ce que** lesdits moyens d'attache (10, 12) comprennent un ensemble d'écrous et de boulons.

10. Arrangement de parties de composant selon l'une quelconque des revendications précédentes, **caractérisé en ce que** ledit composant comprend une partie d'un moteur à turbine à gaz.
